# EUROPEAN PATENT APPLICATION

(11) **EP 4 776 131 A1**
(43) Date of publication of application: **15.07.2026**
(21) Application number: 24932563.0
(22) Date of filing: 26.12.2024
(51) Int. Cl.: G06F 9/50, G06F 9/48

(54) **INSTRUCTION SCHEDULING METHOD AND APPARATUS, AND PROCESSOR, ELECTRONIC APPARATUS AND STORAGE MEDIUM**

(30) Priority: 26.03.2024 CN 202410355692
(71) Applicant: Hygon Information Technology Co., Ltd., Tianjin 300392 (CN)
(72) Inventor: TAN, Xu, Tianjin 300392 (CN); JIN, Weisong, Tianjin 300392 (CN)
(74) Representative: Maiwald GmbH
(86) International application number: PCT/CN2024/142758
(87) International publication number: WO 2025/200656

(57) **Abstract**

Provided in the embodiments of the present disclosure are an instruction scheduling method and apparatus for a simultaneous multithreading processor, and a processor, an electronic apparatus and a non-transitory storage medium. The instruction scheduling method comprises: in response to there being a plurality of instructions belonging to a plurality of threads in a current pipeline stage and a priority thread scheduling policy being enabled, acquiring a priority thread from among the plurality of threads; and on the basis of the priority thread, selecting a target instruction from among the plurality of instructions of the plurality of threads to enter the current pipeline stage.

## Description

The present application claims the priority of Chinese Patent Application No. 202410355692.5 filed on March 26, 2024, the disclosure of which is incorporated by reference herein in its entirety as part of the present application.

### TECHNICAL FIELD

Embodiments of the present disclosure relate to an instruction scheduling method and apparatus, a processor, an electronic device, and a storage medium.

### BACKGROUND

Simultaneous multithreading (SMT) technique can enable a physical CPU core to concurrently process a plurality of threads, improving the resource utilization ratio and the overall performance. When a single thread is running, a plurality of execution units within the CPU may be idle for pause reasons such as cache miss. When the SMT technique is adopted, even though a certain thread pauses, other threads may also continue to use these hardware resources, avoiding idling and improving the multithreading throughput and the performance Per Watts. A thread scheduling strategy will affect the performance and the energy consumption of the SMT and the fairness between threads.

### SUMMARY

At least one embodiment of the present disclosure provides an instruction scheduling method for a simultaneous multithreading processor, including: acquiring a prioritized thread among a plurality of threads in response to there being a plurality of instructions belonging to the plurality of threads in a current pipeline stage and enabling a prioritized thread scheduling strategy; and according to the prioritized thread, selecting a target instruction from the plurality of instructions of the plurality of threads and entering the current pipeline stage.

For example, the instruction scheduling method provided by an embodiment of the present disclosure further includes: in response to a prioritized thread register being at a first value, determining that the prioritized thread scheduling strategy and the prioritized thread are enabled.

For example, the instruction scheduling method provided by an embodiment of the present disclosure further includes: in response to the prioritized thread register being at a second value different from the first value, determining that the prioritized thread scheduling strategy is disabled.

For example, in the instruction scheduling method provided by an embodiment of the present disclosure, the selecting, according to the prioritized thread, a target instruction from the plurality of instructions of the plurality of threads to enter the current pipeline stage includes: in a case where the prioritized thread satisfies a preset condition, selecting an instruction belonging to the prioritized thread from the plurality of instructions of the plurality of threads as the target instruction and entering the current pipeline stage; or in a case where the prioritized thread does not satisfy the preset condition, selecting, by adopting a non-prioritized thread scheduling strategy, the target instruction from the plurality of instructions of the plurality of threads and entering the current pipeline stage.

For example, the instruction scheduling method provided by an embodiment of the present disclosure further includes: in response to the prioritized thread being inactive at the current pipeline stage, the in a case where the prioritized thread does not satisfy the preset condition, selecting, by adopting a non-prioritized thread scheduling strategy, the target instruction from the plurality of instructions of the plurality of threads and entering the current pipeline stage includes: selecting, by adopting the non-prioritized thread scheduling strategy, an instruction not belonging to the prioritized thread from the plurality of instructions of the plurality of threads as the target instruction and entering the current pipeline stage.

For example, in the instruction scheduling method provided by an embodiment of the present disclosure, the non-prioritized thread scheduling strategy includes a round-robin scheduling strategy.

For example, in the instruction scheduling method provided by an embodiment of the present disclosure, the preset condition includes: a numerical relationship between a number of instructions belonging to the prioritized thread and a preset threshold, and the prioritized thread being active at the current pipeline stage.

For example, in the instruction scheduling method provided by an embodiment of the present disclosure, the current pipeline stage includes a branch prediction stage, an instruction fetching stage, an instruction decoding stage, an instruction dispatching and renaming stage, an instruction execution stage, or an instruction retiring stage.

For example, in the instruction scheduling method provided by an embodiment of the present disclosure, in a case where a plurality of prioritized threads are present among the plurality of threads, selecting one prioritized thread of the plurality of prioritized threads as a target prioritized thread, where the target instruction belongs to the target prioritized thread.

At least one embodiment of the present disclosure provides an instruction scheduling apparatus for a simultaneous multithreading processor, including: an acquisition module configured to acquire a prioritized thread among the plurality of threads, in response to there being a plurality of instructions belonging to the plurality of threads in a current pipeline stage and enabling a prioritized thread scheduling strategy; and a processing module configured to according to the prioritized thread, select a target instruction from the plurality of instructions of the plurality of threads and enter the current pipeline stage.

For example, the instruction scheduling apparatus provided by an embodiment of the present disclosure further includes a prioritized thread register, where the processing module is further configured to: in response to the prioritized thread register being at a first value, determine that the prioritized thread scheduling strategy and the prioritized thread are enabled; or in response to the prioritized thread register being at a second value different from the first value, determining that the prioritized thread scheduling strategy is disabled.

For example, in the instruction scheduling apparatus provided by an embodiment of the present disclosure, the processing module is further configured to: in a case where the prioritized thread satisfies a preset condition, select an instruction belonging to the prioritized thread from the plurality of instructions of the plurality of threads as the target instruction and enter the current pipeline stage; or in a case where the prioritized thread does not satisfy the preset condition, select, by adopt a non-prioritized thread scheduling strategy, the target instruction from the plurality of instructions of the plurality of threads and enter the current pipeline stage.

For example, in the instruction scheduling apparatus provided by an embodiment of the present disclosure, the processing module is further configured to: in response to the prioritized thread being inactive at the current pipeline stage, in a case where the prioritized thread does not satisfy the preset condition, select, by adopt the non-prioritized thread scheduling strategy, an instruction not belonging to the prioritized thread from the plurality of instructions of the plurality of threads as the target instruction and enter the current pipeline stage.

For example, in the instruction scheduling apparatus provided by an embodiment of the present disclosure, the processing apparatus is further configured to: in a case where a plurality of prioritized threads are present among the plurality of threads, select one prioritized thread of the plurality of prioritized threads as a target prioritized thread, where the target instruction belongs to the target prioritized thread.

At least one embodiment of the present application further provides an instruction scheduling apparatus, including: a processing unit; and a storage unit that stores computer-executable instructions, where when the computer-executable instructions are executed by the processing unit, the instruction scheduling method provided by any embodiment of the present disclosure is performed.

At least one embodiment of the present disclosure further provides a simultaneous multithreading processor, including the instruction scheduling apparatus provided by any embodiment of the present disclosure.

At least one embodiment of the present disclosure further provides a simultaneous multithreading processor, including a pipeline, where the pipeline includes a current pipeline stage that has a plurality of instructions belonging to a plurality of threads; and the pipeline is configured to enable a prioritized thread scheduling strategy and acquire a prioritized thread among the plurality of threads, and configured to select, according to the prioritized thread, a target instruction from the plurality of instructions of the plurality of threads to enter the current pipeline stage.

For example, the simultaneous multithreading processor provided by an embodiment of the present disclosure further includes: a prioritized thread register configured to, in response to the prioritized thread register being at a first value, the prioritized thread among the plurality of threads.

At least one embodiment of the present disclosure provides an electronic device, including the simultaneous multithreading processor provided by any embodiment of the present disclosure.

At least one embodiment of the present disclosure provides a non-transitory storage medium, non-transitorily storing computer-executable instructions, where when the computer-executable instructions are executed by a computer, the instruction scheduling method provided by any embodiment of the present disclosure is performed.

### BRIEF DESCRIPTION OF DRAWINGS

To describe the technical solutions of the embodiments of the present disclosure more clearly, the accompanying drawings for the embodiments will be introduced below briefly. Apparently, the accompanying drawings in the following description merely involve some embodiments of the present disclosure and are not limiting of the present disclosure.
FIG. 1 illustrates a schematic diagram of a pipeline of a processor core;
FIG. 2 illustrates a flowchart of an instruction scheduling method for a simultaneous multithreading processor provided by at least one embodiment of the present disclosure;
FIG. 3 illustrates a flowchart of an application example of an instruction scheduling method of a simultaneous multithreading processor provided by at least one embodiment of the present disclosure;
FIG. 4 illustrates a schematic block diagram of an instruction scheduling apparatus provided by at least one embodiment of the present disclosure;
FIG. 5 illustrates a schematic block diagram of another instruction scheduling apparatus provided by at least one embodiment of the present disclosure;
FIG. 6 illustrates a schematic diagram of a non-transitory storage medium provided by at least one embodiment of the present disclosure; and
FIG. 7 illustrates a schematic block diagram of an electronic device provided by at least one embodiment of the present disclosure.

### DETAILED DESCRIPTION

In order to make the objectives, technical solutions, and advantages of the embodiments of the present disclosure clearer, the technical solutions in the embodiments of the present disclosure are clearly and completely described below with reference to the drawings in the embodiments of the present disclosure. Apparently, the described embodiments are some rather than all of the embodiments of the present disclosure. All other embodiments derived from the described embodiments of the present disclosure by those of ordinary skill in the art without creative efforts shall fall within the protection scope of the present disclosure.

Unless otherwise defined, the technical or scientific terms used herein should have the usual meanings understood by those of ordinary skill in the field to which the present disclosure belongs. Terms such as "first" and "second" used herein do not denote any order, quantity or importance, but are merely intended to distinguish between different constituents. Similarly, the terms "one", "a", and "the", and similar words are not meant to be limiting, but rather denote the presence of at least one. "Comprising", "including", and similar words mean that elements or articles appearing before "comprising" or "including" include the elements or articles and their equivalent elements appearing behind "comprising" or "including", not excluding any other elements or articles. Terms such as "connected to" and "connected with" are not restricted to physical or mechanical connections, but may also include electrical connections, whether direct or indirect. "Upper", "lower", "left", "right", and the like are used only to indicate a relative positional relationship, and when the absolute position of the described object is changed, the relative positional relationship is also changed accordingly.

To make the following description of the embodiments of the present disclosure clear and concise, the detailed description of some known functions and known components is omitted in the present disclosure.

To improve the performance of a processor core, the processor core may function in a pipeline manner. That is, the entire process of fetching, decoding, execution, and result writing for an instruction is divided into a plurality of pipeline stages, and one instruction can only be at a certain pipeline stage at one clock. However, the processor core may enable a plurality of instructions to run at different pipeline stages.

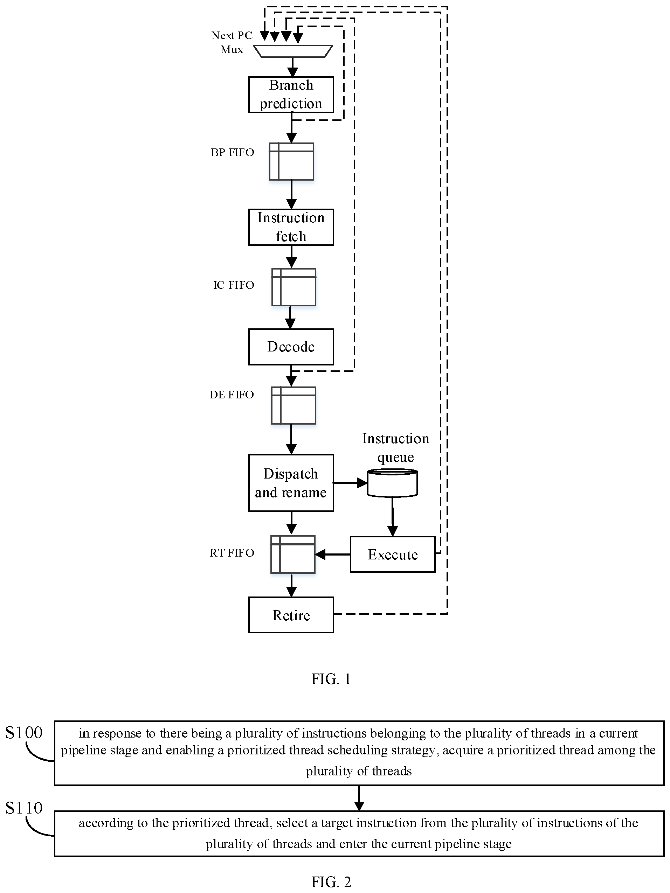

FIG. 1 illustrates a schematic diagram of a pipeline of a processor core, in which the arrowed dashed lines represent redirected instruction streams.

As shown in FIG. 1, a processor core (e.g., a CPU core) of a single-core processor or a multi-core processor improves the instruction level parallelism by pipelining. A plurality of pipeline stages are included within the processor core. For example, after program counters of various sources are fed in the pipeline and next program counter (PC) is selected by a multiplexer (Mux), an instruction corresponding to the program counter is subjected to operations such as branch prediction, instruction fetching, instruction decoding, instruction dispatching and renaming, instruction execution, instruction retiring, etc. Waiting queues are set as needed between pipeline levels, and these queues are typically first-in first-out (FIFO) queues. For example, a branch prediction (BP) FIFO queue is set behind a branch prediction unit to store a branch prediction result. An instruction cache (IC) FIFO queue is set behind an instruction fetching unit to cache the fetched instruction. A decoding (DE) FIFO queue is set behind an instruction decoding unit to cache the decoded instruction. A retiring FIFO queue is set behind an instruction dispatching and renaming unit to cache the instruction that has been executed and waits for confirmation of retiring. Moreover, the pipeline of the processor core further includes an instruction queue to cache instructions waiting for execution by the instruction execution unit after instruction dispatching and renaming.

In order to support a high running frequency, each pipeline stage may further include a plurality of pipeline levels (operation cycles). Limited operations are performed at each pipeline level to further improve the performance of the processor core. Although limited operations are performed at each pipeline level, each clock can become shortest, and the performance of the CPU core can be improved by increasing the operation frequency of the CPU. The performance of the processor core may also be further improved by holding more instructions at each pipeline level (i.e., the superscalar technique). Superscalar refers to a method for concurrently executing a plurality of instructions within one cycle that has increased instruction level parallelism. A processor capable of processing a plurality of instructions within one cycle is called a superscalar processor. The superscalar processor has additional resources added on the basis of a common scalar processor and creates a plurality of pipelines, each of which performs an instruction assigned thereto, thereby realizing parallelism.

Similarly, to improve the instruction execution parallelism in the processor, the processor may also adopt the simultaneous multithreading (SMT) technique in which the pipeline architecture (also referred to as "pipeline" for short) for instruction execution of the processor can support simultaneous execution of two or more (hardware) threads, such as SMT2 (supporting two concurrent threads at most), SMT4 (supporting four concurrent threads at most), or SMT8 (supporting eight concurrent threads at most). In the pipeline of the processor supporting SMT, computing resources in the processor are shared by a plurality of threads. For example, each thread has a respective independent logic register. Among various controlling queues of the pipeline, some may be shared by a plurality of threads, such as an instruction scheduling queue, and some may also be statically divided between a plurality of threads, such as an instruction. The SMT technique may increase the pipeline resource utilization rate by means of the parallelism between threads.

The processor adopting the SMT technique may operate in the SMT mode, and may also operate in a single thread mode. For example, in the SMT mode, when a thread encounters a waiting state, other threads can continue with execution. Thus, the utilization ratio of the hardware resources can be effectively increased, thereby enhancing the multi-thread processing capacity, the overall performance, and the performance per watts of the CPU core.

As noted by the inventors of the present disclosure, in the SMT case where dynamic resources are shared, since there is competition for the hardware resources in the processor between a plurality of threads at their respective pipeline stages, the SMT may have an influence on the performance of a single thread.

Embodiments of the present disclosure provide an instruction scheduling method and apparatus for a simultaneous multithreading processor, a processor, a chip, and a non-transitory storage medium. The instruction scheduling method includes: in response to there being a plurality of instructions belonging to the plurality of threads in a current pipeline stage and enabling a prioritized thread scheduling strategy, acquiring a prioritized thread among the plurality of threads; and selecting, according to the prioritized thread, a target instruction from the plurality of instructions of the plurality of threads to enter the current pipeline stage. The instruction scheduling method can improve the scheduling execution efficiency of the instructions of the plurality of threads, improving the performance of the processor core.

In the present disclosure, an operation cycle may be, for example, a clock cycle or a machine cycle, or may also be other time periods for completing an operation in the instruction pipeline of the processor. The execution process of an instruction includes a plurality of stages, and a basic operation (e.g., instruction fetching, memory reading, or memory writing) is completed at each stage. The time required to complete a basic operation is called the machine cycle, also referred to as a CPU cycle.

FIG. 2 illustrates a flowchart of an instruction scheduling method for a simultaneous multithreading processor provided by at least one embodiment of the present disclosure.

As shown in FIG. 2, the instruction scheduling method provided by this embodiment may include steps S100 to S110.

At step S100, in response to there being a plurality of instructions belonging to the plurality of threads in a current pipeline stage and enabling a prioritized thread scheduling strategy, acquire a prioritized thread among the plurality of threads.

For step S100, the "current pipeline stage" refers to a pipeline stage of a processor as a description object among a plurality of pipeline stages. For example, the current pipeline stage may include any currently described pipeline stage among pipeline stages such as a branch prediction stage, an instruction fetching stage, an instruction decoding stage, an instruction dispatching and renaming stage, an instruction execution stage, or an instruction retiring stage, which will not be limited in the embodiments of the present disclosure.

Here, the "prioritized thread scheduling strategy" is intended to sort or schedule a plurality of instructions in a processor pipeline according to a priority that a thread is endowed with, so as to optimize the execution efficiency of a key task or a high-priority thread.

In the simultaneous multithreading processor, when there are a plurality of instructions to be processed for a plurality of different threads in a pipeline stage (e.g., the instruction fetching stage, the instruction decoding stage, the instruction dispatching stage, or the instruction execution stage), the processor has different operation modes according to whether the prioritized thread scheduling strategy is enabled.

For example, the processor can determine whether the prioritized thread scheduling strategy is enabled according to the settings of run software. For example, when software is compiled, whether the prioritized thread scheduling strategy is enabled for a certain part or all of instructions is determined according to a mode or a requirement (e.g., for real-time control) of the instructions. When it is determined that the prioritized thread scheduling strategy is enabled, the processor can be notified by altering hardware settings. For example, the processor may include at least one prioritized thread register that can be configured to label whether the prioritized thread scheduling strategy is enabled and can be further configured to label a prioritized thread among a plurality of threads executed in the processor in a case where the prioritized thread scheduling strategy is enabled, the prioritized thread being a thread needing to be scheduled preferentially.

For example, the priorities of the threads can also be adjusted based on a workload and performance monitoring data during running or input information from a user. For example, priorities of the threads can also be adjusted based on task types, emergency degrees, historical performance, preset priorities, and other related factors of the threads. for example, these adjustments may be, for example, made almost in real time. For example, whether the adjustment needs to be made is detected according to a certain cycle (e.g., per 1 second).

At step S110, according to the prioritized thread, select a target instruction from the plurality of instructions of the plurality of threads and enter the current pipeline stage.

For step S110, for example, when the prioritized thread is active at the current pipeline stage, an instruction belonging to the prioritized thread can be selected preferentially from the plurality of instructions of the plurality of threads as the target instruction to enter current pipeline stage. For example, at the instruction decoding stage, the target instruction is subjected to the decoding operation; at the instruction dispatching stage, the target instruction is dispatched; or at the instruction execution stage, the target instruction is fed to the execution unit (e.g., a logical operation unit, an ALU unit, or an LSU unit) for execution.

In another aspect, for example, among the plurality of threads, when the prioritized thread is inactive at the current pipeline stage, a conventional non-prioritized thread scheduling strategy still can be adopted to select the corresponding instruction from the plurality of threads to enter the current pipeline stage.

In yet another aspect, for example, for the sake of fairness and the system stability or reliability, when the prioritized thread itself has a large number of instructions to be scheduled (e.g., exceeding 1/2 or 3/4 of the number of instructions that the instruction queue of the current pipeline stage can hold), the non-prioritized thread scheduling strategy still can be adopted to select the corresponding instruction from the plurality of threads to enter the current pipeline stage to avoid that a non-prioritized thread is unable to obtain resources because it is not scheduled for a long time.

In yet another aspect, for example, when an instruction present in the non-prioritized thread is the precondition that an instruction in the prioritized thread can be executed continuously, the instruction of the non-prioritized thread can be selected preferentially as the target instruction to enter the current pipeline stage, and then the instruction belonging to the prioritized thread is selected to enter the current pipeline stage.

In an embodiment of the present disclosure, a thread being "active" or "inactive" at the current pipeline stage refers to whether the thread is in a state where it can be executed immediately. For example, when a thread is in a ready state (rather than a waiting state or stalled state), the thread can be regarded as "active". For example, when a thread has no instruction for execution at the current pipeline stage, the thread can be regarded as "inactive" at the current pipeline stage.

Therefore, in an embodiment of the present disclosure, the processor can select, according to a specific state or case of the prioritized thread, a suitable instruction from the plurality of instructions of the plurality of threads as the target instruction, and feed the target instruction to the current pipeline stage. In this way, the processor can ensure that the processing fairness, stability, and reliability of the plurality of threads are taken into account while the processing efficiency of the prioritized thread is improved when the plurality of threads run simultaneously, thereby improving the overall processing efficiency.

In some embodiments of the present disclosure, the instruction scheduling method may further include step S120 (not shown).

At step S120, in response to the prioritized thread register being at a first value, it is determined that the prioritized thread scheduling strategy and the prioritized thread are enabled.

For step S120, for example, the prioritized thread register can be configured to label whether the prioritized thread scheduling strategy is enabled and record the prioritized thread among the plurality of threads. In a case where the prioritized thread register is at the first value, it is determined that the prioritized thread scheduling strategy and the labeled prioritized thread are enabled. For example, the prioritized thread register may label whether the prioritized thread scheduling strategy is enabled depending on whether the 0th bit is "1". For the SMT4 processor, the prioritized thread among the plurality of threads is recorded using the 1st to the 4th bits. For example, "0001" represents that the thread numbered as 1 is the prioritized thread. For example, "0100" represents that the thread numbered as 3 is the prioritized thread. For example, "0101" represents that the threads numbered as 1 and 3 are the prioritized threads. Alternatively, for the SMT4 processor, whether the prioritized thread scheduling strategy is enabled and the prioritized thread among the plurality of threads is recorded are labeled simultaneously using the 0th to the 3rd bits. When "1" is present among the 4 bits, it represents that the prioritized thread scheduling strategy is enabled and the corresponding thread is the prioritized thread. For example, "0101" represents that the prioritized thread scheduling strategy is enabled and the threads numbered as 1 and 3 are the prioritized threads.

For example, the "first value" may also include a preset any numerical value or any identifier, which will not be limited in the embodiments of the present disclosure.

In some embodiments of the present disclosure, the instruction scheduling method may further include step S121 (not shown).

At step S121, in response to the prioritized thread register being at a second value different from the first value, it is determined that the prioritized thread scheduling strategy is disabled.

For step S121, for example, in a case where the prioritized thread register is at the second value, it is determined that the prioritized thread scheduling strategy is disabled. The labeled prioritized thread may serve as a normal thread (i.e., non-prioritized thread), the target instruction can be selected, adopting the non-prioritized thread scheduling strategy, from the plurality of instructions of the plurality of threads to enter the current pipeline stage. Here, the "second value" may include a preset numerical value or identifier different from the "first value".

For example, when it is determined, according to the running condition, that the non-prioritized thread does not need to be used, the prioritized thread register can be modified from the first value to the second value, thereby notifying the processor of adjusting the scheduling strategy (e.g., switching the scheduling strategy).

In some embodiments of the present disclosure, step S110 may further include step S111 or step S112 (not shown).

At step S111, in a case where the prioritized thread satisfies a preset condition, an instruction belonging to the prioritized thread is selected as the target instruction from the plurality of instructions of the plurality of threads to enter the current pipeline stage.

For step S111, in a case where the prioritized thread satisfies the preset condition, the instruction belonging to the prioritized thread can be selected preferentially as the target instruction from the plurality of instructions of the plurality of threads to enter the current pipeline stage. The instruction belonging to the non-prioritized thread is then selected to enter the current pipeline stage. For example, an instruction can be selected, adopting the non-prioritized thread scheduling strategy, from a plurality of non-prioritized threads to enter the current pipeline stage.

At step S112, in a case where the prioritized thread does not satisfy the preset condition, the target instruction is selected, adopting the non-prioritized thread scheduling strategy, from the plurality of instructions of the plurality of threads to enter the current pipeline stage.

For step S112, in a case where the prioritized thread does not satisfy the preset condition, the prioritized thread is regarded as the non-prioritized thread for participating in instruction scheduling, the target instruction can be selected, adopting the non-prioritized thread scheduling strategy, from the plurality of instructions of the plurality of threads to enter the current pipeline stage.

For example, the preset condition may be different for different pipeline stages. For example, at the instruction dispatching stage, the preset condition may include that the number of instructions belonging to the prioritized thread among the plurality of threads is less than the numbers of instructions of other non-prioritized threads (exemplarily, the number of instructions belonging to the prioritized thread is less than 1/2 of the number of instructions that the instruction queue at the instruction dispatching stage can hold). At the instruction execution stage, the preset condition may include that the instruction queue has a large number of instructions belonging to the prioritized thread (exemplarily, the number of instructions belonging to the prioritized thread is greater than 1/2 of the number of instructions that the instruction queue at the instruction execution stage can hold or greater than 1/2 of the number of instructions in the instruction queue at the instruction execution stage). It needs to be noted that those skilled in the art can set a specific threshold of the preset condition according to an actual requirement.

In some embodiments of the present disclosure, the preset condition includes: a numerical relationship between the number of instructions belonging to the prioritized thread and a preset threshold, and the prioritized thread being active at the current pipeline stage.

For example, different "preset thresholds" may be set for different pipeline stages.

For example, in a case where the current pipeline stage is the instruction dispatching stage, the preset threshold may be 1/2 or 3/4 of the total number of instructions that the instruction queue can hold. The preset condition may include the number of instructions belonging to the prioritized thread not exceeding the preset threshold and the prioritized thread being active at the instruction dispatching stage.

Exemplarily, in a case where the prioritized thread is active at the instruction dispatching stage, when the number of instructions belonging to the prioritized thread exceeds the preset threshold, the prioritized thread is not considered. That is, the prioritized thread is regarded as the non-prioritized thread, and the target instruction is selected, adopting the non-prioritized thread scheduling strategy, from the plurality of instructions of the plurality of threads to enter the instruction queue. When the number of instructions belonging to the prioritized thread does not exceed the preset threshold, the prioritized thread scheduling strategy is adopted to preferentially select, as the target instruction, the instruction belonging to the prioritized thread from the plurality of instructions of the plurality of threads to enter the instruction queue at the instruction dispatching stage. The instruction belonging to the non-prioritized thread is then selected to enter the instruction queue at the instruction dispatching stage.

For example, in a case where the current pipeline stage is the instruction execution stage, the preset threshold may include 1/4, 1/3, or 1/2 of the total number of instructions that the instruction queue can hold. The preset condition at the instruction execution stage may include the number of instructions belonging to the prioritized thread in the instruction queue exceeding the preset threshold and the prioritized thread being active at the instruction execution stage.

Exemplarily, in a case where the prioritized thread is active at the instruction execution stage, when the number of instructions belonging to the prioritized thread in the instruction queue does not exceed the preset threshold, the prioritized thread loses the priority and is regarded as the non-prioritized thread, and the non-prioritized thread scheduling strategy is adopted to select the target instruction from the instruction queue for execution. Further, an instruction in a ready state (i.e., a ready instruction) in the instruction queue can be executed preferentially. When the number of instructions belonging to the prioritized thread in the instruction queue exceeds the preset threshold, the instructions belonging to the prioritized thread in the instruction queue are executed preferentially. Further, an instruction in the instruction queue that belongs to the prioritized thread and is in the ready state can be executed preferentially, and then an instruction in the instruction queue that belongs to the non-prioritized thread and is in the ready state can be executed.

In some embodiments of the present disclosure, step S112 may further include step S1121 (not shown).

At step S1121, in response to the prioritized thread being inactive at the current pipeline stage, an instruction not belonging to the prioritized thread is selected, adopting the non-prioritized thread scheduling strategy, from the plurality of instructions of the plurality of threads as the target instruction to enter the current pipeline stage.

For step S1121, the non-prioritized thread scheduling strategy may include a round-robin scheduling strategy, a best-candidate selection scheduling strategy, etc., which will not be limited in the embodiments of the present disclosure.

For example, the processing flow including 4 threads T0, T1, T2, and T3 can be maintained simultaneously in the SMT4 architecture. For each pipeline stage (e.g., the execution stage), when the non-prioritized thread scheduling strategy is adopted, the processor may start checking from the first thread (e.g., T0) adopting the round-robin scheduling strategy and perform cyclic checking in an order from T0→T1→ T2→T3→T0, so as to check whether the instructions in the queue are qualified to enter the pipeline stage for processing (e.g., execution). For example, when the instructions of the 4 threads do not satisfy an execution condition, the CPU will be stalled within the operation cycle (i.e., no effective instruction is executed) and wait for at least one thread being ready. When only the instructions of one thread satisfy the execution condition, the instruction of this thread is directly selected to enter the current pipeline stage for execution. When a plurality of threads (e.g., at least 2 of T0, T1, T2, and T3) satisfy the execution condition, the thread to be executed is selected in a given order. For example, in the order from T0→T1→T2→T3→ T0, when T0 is selected in the last operation cycle, T1 can be selected in the current operation cycle; next, T2 can be selected, and then T3 can be selected, and then T0 is selected again. This process can be circulated in this way.

In at least one embodiment of the present disclosure, the fairness between a plurality of concurrent threads is ensured by circularly allocating the processor execution resources adopting the round-robin scheduling strategy such that each thread has an opportunity to obtain a CPU time slice by turns in a preset order to execute instructions, avoiding the starvation problem of other threads due to exclusive occupation of resources by a single thread for a long time. The simple and intuitive design makes the implementation cost low and the understanding and maintenance easy, thereby being conducive to simplifying the system architecture and the debugging work. In a case where the task loads of the plurality of threads are relatively balanced, the round-robin scheduling strategy is further conducive to realizing effective utilization of hardware resources and increasing the throughput of the entire system.

For example, when next executable thread is selected adopting the best-candidate selection scheduling strategy to enter the current pipeline stage, the states of a plurality of threads can be considered (e.g., whether the thread is active, whether there is a conflict-free instruction to be processed between the plurality of threads, the thread having the lowest influence on the overall performance) such that a suitable thread is selected from the plurality of threads as the source of the target instruction.

In some embodiments of the present disclosure, the instruction scheduling method may further include step S130 (not shown).

At step S130, in a case where a plurality of prioritized threads are present among the plurality of threads, one of the plurality of prioritized threads is selected as a target prioritized thread, where the target instruction belongs to the target prioritized thread.

For step S130, for example, in a case where two or more threads labeled as the prioritized thread are present among the plurality of threads, for each cycle, one of the plurality of prioritized threads can be selected, e.g., adopting the round-robin strategy, as the target prioritized thread, and other unselected prioritized threads in the cycle can be regarded as non-prioritized threads, so as to further avoid preemption of resources by the plurality of prioritized threads and avoid influence on the processing efficiency. For example, the states of the plurality of prioritized threads may also be taken into comprehensive consideration, and a better one of the prioritized threads is selected as the target prioritized thread. For example, in a multi-core architecture, other threads labeled as the prioritized threads may also be switched to other CPU cores for execution, so as to improve the overall processing efficiency of the processor.

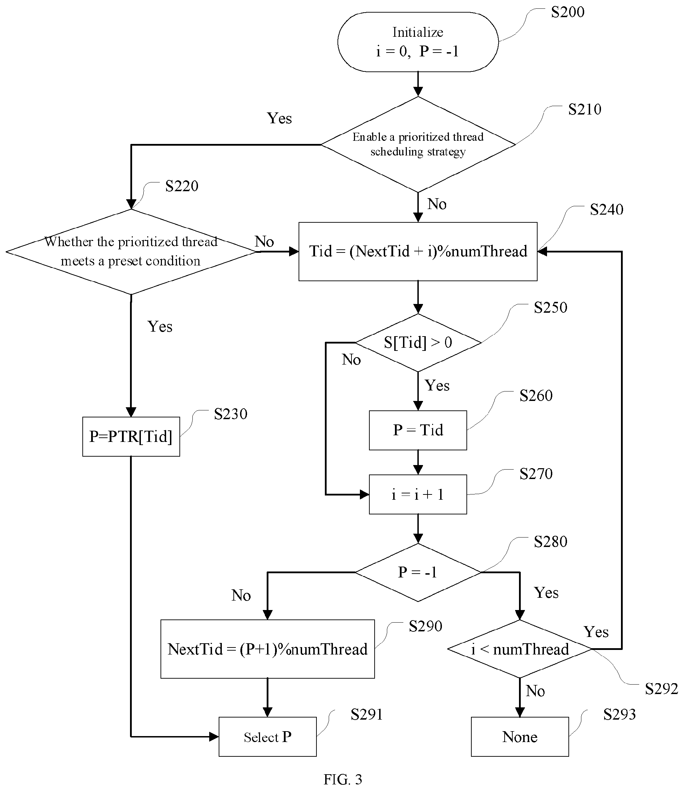

FIG. 3 illustrates a flowchart of an application example of an instruction scheduling method of a simultaneous multithreading processor provided by at least one embodiment of the present disclosure.

As shown in FIG. 3, the instruction scheduling method for the simultaneous multithreading processor is described exemplarily by taking the instruction scheduling method at the instruction dispatching pipeline stage as an example.

For example, the instruction scheduling method for the simultaneous multithreading processor at the instruction dispatching stage may include steps S200 to S293. The following steps are intended to schedule instructions waiting for scheduling in one operation cycle.

At step S200, initialization is performed such that i=0 and P=-1.

For step S200, i is an integer, and P represents the selected thread number after the above instruction scheduling method is performed in the operation cycle.

For example, 4 threads including T0, T1, T2, and T3 are maintained simultaneously in the SMT4 architecture. P=0 may represent that the thread T0 is then selected, and its initial value is -1, representing that no selection is made yet.

At step S210, whether the prioritized thread scheduling strategy is enabled is determined. When it is determined that the prioritized thread scheduling strategy is enabled, step S220 is performed; otherwise, step S240 is performed.

For step S210, for example, whether the prioritized thread scheduling strategy is enabled is determined by reading the value of the prioritized thread register.

When the value of the prioritized thread represents that the prioritized thread scheduling strategy is enabled, step S220 is performed; otherwise, step S240 is performed. For example, reference may be made to the above related description about step 120 and step S121, which will not be repeated here.

At step S220, whether the prioritized thread satisfies the preset condition is determined. When the preset condition for the prioritized thread being selected is met, step S230 is performed; otherwise, step S240 is performed (as will be described below).

For step S220, in a case where it is determined that the prioritized thread scheduling strategy is enabled, whether the prioritized thread satisfies the preset condition is further determined; when yes, step S230 is performed; otherwise, step S240 is performed.

For example, at the instruction dispatching pipeline stage, the preset condition includes whether the number of instructions belonging to a prioritized thread among a plurality of threads does not exceed 1/2 of the number of instructions that an instruction queue can hold.

At step S230, set P=PTR[Tid].

For step S230, PTR[Tid] represents the prioritized thread among the plurality of threads. Thus, P is assigned the thread number of PTR[Tid]. That is, the prioritized thread is set as the selected thread, and then step S291 is performed (as will be described below).

At step S240, Tid=(NextTid + i)%numThread.

For step S240, when the prioritized thread scheduling strategy is adopted for scheduling, Tid represents ID of a thread considered currently (referred to as "current thread" for short); NextTid represents ID of a starting thread in round-robin of the current operation cycle (because the initial value of i is 0, and NextTid is determined in a previous operation cycle to the current operation cycle, as described in step 290 below); and numThread represents the maximum number of active threads the CPU core supports (e.g., for SMT4, the value of this parameter is 4).

At step S250, whether S[Tid] is greater than 0 is determined.

For step S250, whether the current thread satisfies a scheduling condition is determined, and scheduling can be allowed. When S[Tid] is greater than 0, it represents that the current thread satisfies the scheduling condition and can be selected, and then step S260 is performed; otherwise, step S270 is performed.

At step S260, set P=Tid.

For step S260, P is assigned Tid, i.e., the thread number of the current thread. That is, the current thread is selected. For example, it is determined that the thread 0 satisfies the scheduling condition in step S250, i.e., Tid=0, and then P=0 in step S260.

At step S270, I=i+1. Thus, the round-robin operation in the scheduling method in this operation cycle is realized.

At step S280, whether P is equal to -1 is determined.

For step S280, whether selection has been made (i.e., the target thread is obtained) in the current operation cycle is determined. When P is not equal to -1 (i.e., selection has been made), step S290 is performed; otherwise, step S292 is performed (as will be described below).

At step S290, NextTid=(P+1)%numThread.

For step S290, whether the starting thread satisfying the scheduling condition is a thread immediately after the selected thread P (the thread of which the thread number is incremented by 1) needs to be detected in round-robin of next operation cycle. Thus, round-robin is performed between a plurality of operation cycles, which is more conducive to fairly schedule the threads.

At step S291, P is selected. That is, in the current operation cycle, an instruction of the thread P is selected as the target instruction to enter the current pipeline stage.

For step S291, the instruction (i.e., the target instruction) of the thread P is selected from the instruction queue for execution processing. The instructions of the thread corresponding to the thread ID determined by step S260 or step S230 are selected to enter the instruction queue.

At step S292, whether i is less than numThread is determined.

For step S292, whether i is less than the maximum number of active threads the CPU core supports is determined. For example, in the SMT4 architecture, when i is greater than 3 (i.e., greater than or equal to 4), step S293 is performed. When i is less than 4, step S240 is performed again to determine whether next thread satisfies the scheduling condition.

At step S293, None, i.e., no thread is selected in the current operation cycle. As a result, no target instruction is obtained to enter the current pipeline stage.

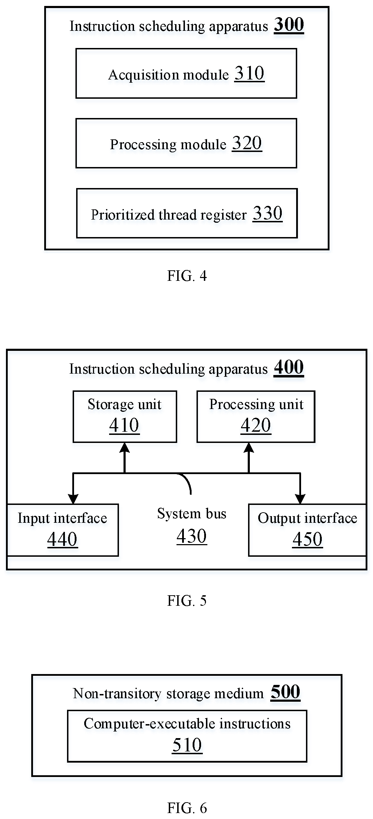

FIG. 4 illustrates a schematic block diagram of an instruction scheduling apparatus provided by at least one embodiment of the present disclosure.

As shown in FIG. 4, the instruction scheduling apparatus 300 includes an acquisition module 310 and a processing module 320.

The acquisition module 310 is configured to, acquire a prioritized thread among the plurality of threads, in response to there being a plurality of instructions belonging to the plurality of threads in a current pipeline stage and enabling a prioritized thread scheduling strategy. The acquisition module 310 may perform, for example, step S100 described in FIG. 1.

The processing module 320 is configured to according to the prioritized thread, select a target instruction from the plurality of instructions of the plurality of threads and entering the current pipeline stage. The processing module 320 may perform, for example, step S110 described in FIG. 1.

In some embodiments of the present disclosure, the instruction scheduling apparatus 300 may further include a prioritized thread register 330. The processing module 320 may be further configured to: in response to a prioritized thread register being at a first value, determining that the prioritized thread scheduling strategy and the prioritized thread are enabled; or in response to the prioritized thread register being at a second value different from the first value, determining that the prioritized thread scheduling strategy is disabled. The processing module 320 may further perform, for example, step S120 or S121 described above.

In some embodiments of the present disclosure, the processing module 320 may be further configured to, in a case where the prioritized thread satisfies a preset condition, selecting an instruction belonging to the prioritized thread from the plurality of instructions of the plurality of threads as the target instruction and entering the current pipeline stage. The processing module 320 may further perform, for example, step S111 described above.

In some embodiments of the present disclosure, the processing module 320 may be further configured to, in a case where the prioritized thread does not satisfy the preset condition, selecting, by adopting a non-prioritized thread scheduling strategy, the target instruction from the plurality of instructions of the plurality of threads and entering the current pipeline stage. The processing module 320 may further perform, for example, step S112 described above.

In some embodiments of the present disclosure, the processing module 320 may be further configured to, in response to the prioritized thread being inactive at the current pipeline stage, in a case where the prioritized thread does not satisfy the preset condition, select, adopting the non-prioritized thread scheduling strategy, an instruction not belonging to the prioritized thread from the plurality of instructions of the plurality of threads as the target instruction and enter the current pipeline stage. The processing module 320 may further perform, for example, step S1121 described above.

In some embodiments of the present disclosure, the processing module 320 may be further configured to, in a case where a plurality of prioritized threads are present among the plurality of threads, selecting one prioritized thread of the plurality of prioritized threads as a target prioritized thread, where the target instruction belongs to the target prioritized thread. The processing module 320 may further perform, for example, step S130 described above.

In an embodiment of the present disclosure, for example, the acquisition module 310 and the processing module 320 may be hardware, software, firmware, and any feasible combination thereof. For example, the acquisition module 310 and the processing module 320 may be special purpose or general purpose circuits, chips, or apparatuses, and may also be a combination of a processor and a memory. The embodiments of the present disclosure have no particular limitation on the specific implementation form of each unit described above.

It needs to be noted that, in an embodiment of the present disclosure, the modules of the instruction scheduling apparatus 300 correspond to the steps of the instruction scheduling method described above. Regarding the specific functions of the instruction scheduling apparatus 300, reference may be made to the related description of the instruction scheduling method described above, which will not be repeated here. The components and the structure of the instruction scheduling apparatus 300 shown in FIG. 4 are merely exemplary and non-limiting. As needed, the instruction scheduling apparatus 300 may further include other components and structures.

FIG. 5 illustrates a schematic block diagram of another instruction scheduling apparatus provided by at least one embodiment of the present disclosure.

For example, as shown in FIG. 5, the instruction scheduling apparatus 400 includes a storage unit 410 and a processing unit 420. For example, the storage unit 410 is configured to non-transitorily store computer-executable instructions, and the processing unit 420 is configured to run the computer-executable instructions. When the computer-executable instructions are run by the processing unit 420, the instruction scheduling method provided by any embodiment of the present disclosure is performed.

For example, the storage unit 410 and the processing unit 420 are coupled to each other. For example, in some examples, as shown in FIG. 5, the instruction scheduling apparatus 400 may further include a system bus 430. The storage unit 410 and the processing unit 420 may communicate with each other by the system bus 430. For example, the processing unit 420 can access the storage unit 410 by the system bus 430.

For example, the processing unit 420 can control other components in the instruction scheduling apparatus to execute desired functions. For example, the processing unit 420 may include a circuit or module having certain instruction processing capability.

For example, the storage unit 410 may include a volatile memory and/or a nonvolatile memory. The volatile memory may include, for example, a random access memory (RAM) and/or a cache, etc. The nonvolatile memory may include, for example, a read only memory (ROM), an erasable PROM (EPROM), a flash memory, etc. The embodiments of the present disclosure have no limitation on this.

For example, one or more computer instructions may be stored on the storage unit 410. The processing unit 420 can run the computer instructions to realize various functions. Various application programs and various kinds of data (e.g., instruction processing codes and various kinds of data used and/or generated by application programs) may also be stored on the computer-readable storage medium.

For example, when some computer instructions stored on the storage unit 410 are executed by the processing unit 420, one or more steps of the instruction scheduling method described above can be performed.

For example, for detailed description of the processing process of the instruction scheduling method in the instruction scheduling apparatus 400, reference may be made to the related description in the embodiments of the instruction scheduling method described above, which will not be repeated here.

It needs to be noted that the instruction scheduling apparatus provided by the embodiments of the present disclosure are merely exemplary and non-limiting. According to actual application requirements, the instruction scheduling apparatus may further include other conventional components and structures. For example, to realize the necessary functions of the instruction scheduling apparatus, those skilled in the art may set other conventional components and structures according to a specific application scenario, which will not be limited in the embodiments of the present disclosure.

At least some embodiments of the present disclosure further provide a simultaneous multithreading (SMT) processor that includes the instruction scheduling apparatus 400 provided by any embodiment described above.

At least some embodiments of the present disclosure further provide another simultaneous multithreading processor including a pipeline, where the pipeline includes a current pipeline stage that has a plurality of instructions belonging to a plurality of threads; and the pipeline is configured to enable a prioritized thread scheduling strategy and acquire a prioritized thread among the plurality of threads, and configured to select, according to the prioritized thread, a target instruction from the plurality of instructions of the plurality of threads to enter the current pipeline stage.

For example, the pipeline design is adopted for the simultaneous multithreading processor so that instructions from a plurality of threads can be processed concurrently at a single pipeline stage. Such a pipeline design can support the prioritized thread scheduling strategy. That is, when a plurality of concurrent threads are processed, the prioritized thread can be identified according to a predefined or dynamically adjusted priority rule. Regarding the specific content of the prioritized thread scheduling strategy, reference may be made to, for example, the related descriptions of the foregoing embodiments, which will not be repeated here.

Regarding the exemplary description of the pipeline in the processor, reference may be made to, for example, what is shown in FIG. 1, which will not be repeated here. For example, the current pipeline stage includes a branch prediction stage, an instruction fetching stage, an instruction decoding stage, an instruction dispatching and renaming stage, an instruction execution stage, or an instruction retiring stage.

In some embodiments, the simultaneous multithreading processor further includes a prioritized thread register configured to, in response to the prioritized thread register being at a first value, label the prioritized thread among the plurality of threads.

For example, when the prioritized thread register is at the first value, the prioritized thread register can label the prioritized thread among the plurality of threads and determine that the prioritized thread scheduling strategy and the labeled prioritized thread are enabled. When the prioritized thread register is at a second value different from the first value, the plurality of threads are labeled and the prioritized thread scheduling strategy is disabled.

At least some embodiments of the present disclosure further provide an electronic device. For example, the electronic device may be implemented as a chip that may include the simultaneous multithreading processor provided by any embodiment described above. For example, the chip may be an independently packaged CPU chip, or may also be a system on chip (SOC). In the SOC, the simultaneous multithreading processor is one of modules and coupled to other modules (e.g., GPU or DSP).

At least some embodiments of the present disclosure further provide a non-transitory storage medium. FIG. 6 is a schematic diagram of a non-transitory storage medium provided by some embodiments of the present disclosure.

For example, as shown in FIG. 6, the storage medium 500 is configured to non-transitorily store computer-executable instructions 510. When the non-transitory computer-executable instructions 510 are executed by a computer (including a processing unit), the instruction scheduling method provided by any embodiment of the present disclosure can be performed.

For example, one or more computer instructions may be stored on the storage medium 500. Some computer instructions stored on the storage medium 500 may be, for example, instructions for implementing one or more steps of the instruction scheduling method described above.

For example, the storage medium may include a storage component of a tablet personal computer, a hard disk of a personal computer, a random access memory (RAM), a read-only memory (ROM), an erasable programmable read-only memory (EPROM), a compact disk read-only memory (CD-ROM), a flash memory, or any combination of such storage mediums, and may also be other suitable storage medium. For example, the storage medium 500 may include the storage unit 410 in the instruction scheduling apparatus 400 described above.

For the technical effects of the storage medium provided by the embodiments of the present disclosure, reference may be made to the corresponding description about the instruction scheduling method in the above embodiments, which will not be repeated here.

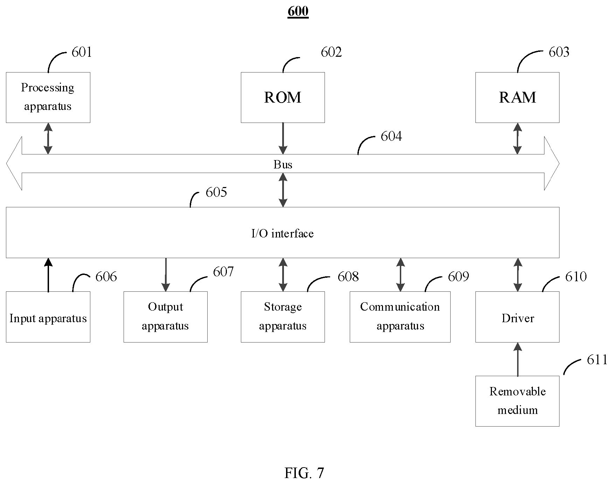

The electronic device provided by at least some embodiments of the present disclosure may also be implemented as a device including the processor of any embodiment described above. FIG. 7 is a schematic block diagram of an electronic device provided by at least one embodiment of the present disclosure.

The electronic device in the at least one embodiment of the present disclosure may include, but is not limited to, mobile terminals such as a mobile phone, a notebook computer, a digital broadcasting receiver, a personal digital assistant (PDA), a portable Android device (PAD), a portable media player (PMP), and a vehicular terminal (e.g., a vehicular navigation terminal), and fixed terminals such as a digital TV and a desktop computer. The electronic device 600 shown in FIG. 7 is merely an example, and should not pose any limitation to the functions and the range of use of the embodiments of the present disclosure.

For example, as shown in FIG. 7, in some examples, the electronic device 600 includes a processing apparatus (e.g., a central processing unit) 601 which may include the SMT processor of any embodiment described above and can perform various suitable actions and processing according to a program stored in a read-only memory (ROM) 602 or a program loaded from a storage apparatus 608 into a random access memory (RAM) 603. The RAM 603 stores various programs and data required for operations of the computer system. The processing apparatus 601, the ROM 602, and the RAM 603 are interconnected by a bus 604. An input/output (I/O) interface 605 is also connected to the bus 604.

For example, the following components may be connected to the I/O interface 605: an input apparatus 606 including, for example, a touch screen, a touch pad, a keyboard, a mouse, a camera, a microphone, an accelerometer, and a gyroscope; an output apparatus 607 including, for example, a liquid crystal display (LCD), a loudspeaker, and a vibrator; a storage apparatus 608 including, for example, a magnetic tape and a hard disk; and a communication apparatus 609 including a network interface card such as a local area network (LAN) card and a modem. The communication apparatus 609 may allow the electronic device 600 to be in wireless or wired communication with other devices to exchange data, and the communication processing is performed via a network such as Internet. A driver 610 may also be connected to the I/O interface 605 as required. A removable medium 611, such as a magnetic disk, an optical disc, a magneto-optical disc, a semiconductor memory, or the like, is installed on the driver 610 as required, so that a computer program read therefrom can be installed in the storage apparatus 608 as required. While FIG. 7 illustrates the electronic device 600 including various apparatuses, it is to be understood that all the illustrated apparatuses are not necessarily implemented or included. More or less apparatuses may be implemented or included alternatively.

For example, the electronic device 600 may further include a peripheral interface (not shown in the figure) and the like. The peripheral interface may be an interface of any type, such as a USB interface and a lighting interface. The communication apparatus 609 may communicate with a network and other devices wirelessly. The network is, for example, Internet, an Intranet, and a wireless network, a wireless local area network (LAN) and/or a metropolitan area network (MAN) such as a cellular telephone network. Wireless communication may be any of a plurality of communication standards, protocols, and techniques, including but not limited to Global System for Mobile Communications (GSM), Enhanced Data Rate for GSM Evolution (EDGE), Wideband Code Division Multiple Access (WCDMA), Code Division Multiple Access (CDMA), Time Division Multiple Address (TDMA), Bluetooth, Wi-Fi (e.g., based on IEEE 802. 11a, IEEE 802. 11b, IEEE 802. 11g, and/or IEEE 802. 11n), Voice Over Internet Protocol (VoIP), Wi-MAX, protocols for E-mail, instant messaging, and/or short message service (SMS), or any other suitable communication protocol.

For example, the electronic device 600 may be any device such as a mobile phone, a tablet personal computer, a notebook computer, an E-book, a game machine, a television, a digital photo frame, a navigator, and a server, and may also be any combination of a data processing apparatus and hardware, which will not be limited in the embodiments of the present disclosure.

For example, the storage apparatus 608 may include any combination of one or more computer program products. The computer program products may include computer-readable storage mediums in various forms, e.g., a volatile memory and/or a nonvolatile memory. The volatile memory may include, for example, a random access memory (RAM) and/or a cache, etc. The nonvolatile memory may include, for example, a read only memory (ROM), a hard disk, an erasable programmable read-only memory (EPROM), a compact disk read-only memory (CD-ROM), a USB memory, a flash memory, etc. The embodiments of the present disclosure have no limitation on this.

The SMT processor adopted by the electronic device 600 can improve the instruction scheduling execution efficiency of a plurality of threads of the processor and improve the performance of the processor core.

It needs to be noted that the electronic device 600 shown in FIG. 7 is merely an example and would not pose any limitation on the functions and the range of use of the embodiments of the present disclosure.

The technical effects of the instruction scheduling apparatus, the chip, the processor, the electronic device, and the non-transitory storage medium described above are the same as the technical effects of the instruction scheduling method described above, which will not be repeated here.

The following points need to be noted:
(1) The accompanying drawings in the embodiments of the present disclosure only involve structures involved in the embodiments of the present disclosure, and other structures may be designed as usual.
(2) The embodiments of the present disclosure and the features in the embodiments can be combined with one another to derive new embodiments without conflict.

The foregoing are merely descriptions of specific embodiments of the present disclosure, but the protection scope of the present disclosure is not limited thereto. The protection scope of the present disclosure is subject to the protection scope of the claims.

## Claims

1. An instruction scheduling method for a simultaneous multithreading processor, comprising:
acquiring a prioritized thread among a plurality of threads in response to there being a plurality of instructions belonging to the plurality of threads in a current pipeline stage and enabling a prioritized thread scheduling strategy; and
according to the prioritized thread, selecting a target instruction from the plurality of instructions of the plurality of threads and entering the current pipeline stage.

2. The instruction scheduling method according to claim 1, further comprising:
in response to a prioritized thread register being at a first value, determining that the prioritized thread scheduling strategy and the prioritized thread are enabled.

3. The instruction scheduling method according to claim 2, further comprising:
in response to the prioritized thread register being at a second value different from the first value, determining that the prioritized thread scheduling strategy is disabled.

4. The instruction scheduling method according to any one of claims 1 to 3, wherein the according to the prioritized thread, selecting a target instruction from the plurality of instructions of the plurality of threads and entering the current pipeline stage comprises:
in a case where the prioritized thread satisfies a preset condition, selecting an instruction belonging to the prioritized thread from the plurality of instructions of the plurality of threads as the target instruction and entering the current pipeline stage; or
in a case where the prioritized thread does not satisfy the preset condition, selecting, by adopting a non-prioritized thread scheduling strategy, the target instruction from the plurality of instructions of the plurality of threads and entering the current pipeline stage.

5. The instruction scheduling method according to claim 4, further comprising: in response to the prioritized thread being inactive at the current pipeline stage,
the in a case where the prioritized thread does not satisfy the preset condition, selecting, by adopting a non-prioritized thread scheduling strategy, the target instruction from the plurality of instructions of the plurality of threads and entering the current pipeline stage comprises:
selecting, by adopting the non-prioritized thread scheduling strategy, an instruction not belonging to the prioritized thread from the plurality of instructions of the plurality of threads as the target instruction and entering the current pipeline stage.

6. The instruction scheduling method according to claim 5, wherein the non-prioritized thread scheduling strategy comprises a round-robin scheduling strategy.

7. The instruction scheduling method according to any one of claims 4 to 6, wherein the preset condition comprises: a numerical relationship between a number of instructions belonging to the prioritized thread and a preset threshold, and the prioritized thread being active at the current pipeline stage.

8. The instruction scheduling method according to any one of claims 1 to 7, wherein the current pipeline stage comprises a branch prediction stage, an instruction fetching stage, an instruction decoding stage, an instruction dispatching and renaming stage, an instruction execution stage, or an instruction retiring stage.

9. The instruction scheduling method according to any one of claims 1 to 8, wherein
in a case where a plurality of prioritized threads are present among the plurality of threads, selecting one prioritized thread of the plurality of prioritized threads as a target prioritized thread, wherein the target instruction belongs to the target prioritized thread.

10. An instruction scheduling apparatus for a simultaneous multithreading processor, comprising:
an acquisition module, configured to acquire a prioritized thread among the plurality of threads, in response to there being a plurality of instructions belonging to the plurality of threads in a current pipeline stage and enabling a prioritized thread scheduling strategy; and
a processing module, configured to according to the prioritized thread, select a target instruction from the plurality of instructions of the plurality of threads and enter the current pipeline stage.

11. The instruction scheduling apparatus according to claim 10, further comprising a prioritized thread register, wherein the processing module is further configured to:
in response to the prioritized thread register being at a first value, determine that the prioritized thread scheduling strategy and the prioritized thread are enabled; or
in response to the prioritized thread register being at a second value different from the first value, determining that the prioritized thread scheduling strategy is disabled.

12. The instruction scheduling apparatus according to claim 10 or 11, wherein the processing module is further configured to:
in a case where the prioritized thread satisfies a preset condition, select an instruction belonging to the prioritized thread from the plurality of instructions of the plurality of threads as the target instruction and enter the current pipeline stage; or
in a case where the prioritized thread does not satisfy the preset condition, select, by adopt a non-prioritized thread scheduling strategy, the target instruction from the plurality of instructions of the plurality of threads and enter the current pipeline stage.

13. The instruction scheduling apparatus according to claim 12, wherein the processing module is further configured to:
in response to the prioritized thread being inactive at the current pipeline stage, in a case where the prioritized thread does not satisfy the preset condition, select, by adopt the non-prioritized thread scheduling strategy, an instruction not belonging to the prioritized thread from the plurality of instructions of the plurality of threads as the target instruction and enter the current pipeline stage.

14. The instruction scheduling apparatus according to any one of claims 10 to 13, wherein the processing apparatus is further configured to: in a case where a plurality of prioritized threads are present among the plurality of threads, select one prioritized thread of the plurality of prioritized threads as a target prioritized thread, wherein the target instruction belongs to the target prioritized thread.

15. An instruction scheduling apparatus, comprising:
a processing unit; and
a storage unit that stores computer-executable instructions;
wherein when the computer-executable instructions are executed by the processing unit, the instruction scheduling method according to any one of claims 1 to 9 is performed.

16. A simultaneous multithreading processor, comprising the instruction scheduling apparatus according to any one of claims 10 to 14.

17. A simultaneous multithreading processor, comprising a pipeline, wherein
the pipeline comprises a current pipeline stage that has a plurality of instructions belonging to a plurality of threads; and
the pipeline is configured to enable a prioritized thread scheduling strategy and acquire a prioritized thread among the plurality of threads, and configured to select, according to the prioritized thread, a target instruction from the plurality of instructions of the plurality of threads to enter the current pipeline stage.

18. The simultaneous multithreading processor according to claim 17, further comprising:
a prioritized thread register, configured to label, in response to the prioritized thread register being at a first value, the prioritized thread among the plurality of threads.

19. An electronic device, comprising the simultaneous multithreading processor according to any one of claims 16 to 18.

20. A non-transitory storage medium, non-transitorily storing computer-executable instructions, wherein when the computer-executable instructions are executed by a computer, the instruction scheduling method according to any one of claims 1 to 9 is performed.
